# EUROPEAN PATENT SPECIFICATION

(11) **EP 3 465 059 B1**
(45) Date of publication and mention of the grant of the patent: **03.08.2022**
(21) Application number: 17749512.4
(22) Date of filing: 07.06.2017
(51) Int. Cl.: F28F 3/04, F28F 3/12, F28D 1/03, F28F 9/02

(54) **HEATING DEVICE AND MODULAR HEATING SYSTEM THAT CAN BE ASSEMBLED IN MODULAR FORM IN THE INSTALLATION STEP**
HEIZVORRICHTUNG UND MODULARES HEIZSYSTEM, DAS IN MODULARER FORM IM INSTALLATIONSSCHRITT MONTIERT WERDEN KANN
DISPOSITIF DE CHAUFFAGE ET SYSTÈME DE CHAUFFAGE MODULAIRE POUVANT ÊTRE ASSEMBLÉS SOUS FORME MODULAIRE DANS L'ÉTAPE D'INSTALLATION

(30) Priority: 07.06.2016 IT UA20164166
(43) Date of publication of application: 10.04.2019
(73) Proprietor: FONDITAL S.p.A., 25079 Vobarno (IT)
(72) Inventor: NIBOLI, Orlando, 25079 Vobarno (IT)
(74) Representative: Cernuzzi, Daniele
(86) International application number: PCT/IB2017/053354
(87) International publication number: WO 2017/212413

(56) References cited:
- WO-A1-02/50419
- WO-A1-79/00301
- WO-A1-03/071213
- DE-U1- 20 017 301
- NL-A- 6 710 583
- US-A- 629 223
- US-A- 2 016 007

## Description

### TECHNICAL FIELD

The present invention relates to a liquid circulation heating device and a modular heating system comprising said device.

The device and the modular system according to the invention are intended in particular for heating indoor rooms/environments and permit, in particular, a modular assembly in the installation step by assembling several modules together directly at the time of installation in the room/environment to be heated (instead of at the factory).

### BACKGROUND ART

A common indoor heating system consists of radiators in which a heating liquid (typically hot water) circulates.

The radiators used in these systems may be made of various metal materials and are often formed of batteries of radiator elements which are manufactured separately and then joined together. The possibility of assembling a variable number of radiator elements enables the construction of radiators with different heating capacities, which are thus suitable for heating rooms of different sizes.

A typical radiator element (for example, but not necessarily, in aluminium obtained by means of a die-casting process) has a substantially tubular body, provided with an inner chamber through which the water flows, and a plurality of heat exchange fins. The radiator element is provided, at respective opposite longitudinal ends, with pairs of transverse joint sleeves (also referred to as joining nipples) for connection to other similar radiator elements and/or to a hydraulic circuit. The radiator elements are arranged side by side and are joined by means of the joint sleeves.

In this way, as already mentioned, it is possible to assemble radiators made up of a different number of elements and, thus, with a different heating capacity.

However, numerous radiator elements have to assembled to achieve the desired performance; furthermore, the radiator elements can only be added to one another laterally.

Moreover, there is scope for improving the efficiency of the radiators of the type mentioned above.

It has been found that the usual shape of the radiator elements of this type, in particular the shape of their water chambers and the configuration of the heat exchange surfaces, do not allow the heat carried by the hot water to be exploited to the full.

The documents NL6710583A and US0629223A represent the closest prior art.

### DISCLOSURE OF INVENTION

An object of the present invention is to provide a heating device that overcomes the drawbacks of the prior art described above.

A further object of the invention is to provide a heating device that overcomes the technical problem of assembling modular heating systems with different power ratings, in a simple and effective way and without excessively increasing the overall dimensions and which can be assembled in modular form, in the requested size, not only in the factory but also directly at the place of installation.

In particular, a purpose of the invention is to provide a heating device that enables the definition of modular heating systems in which the modules can be connected to one another so as to extend in depth (as well as, possibly, in width and in height) even in the installation step (i.e., directly at the place of installation, not in the factory).

A further purpose of the invention is to provide a heating device that also enables the heat of the heating liquid to be exploited to the full, and which is also simple to produce and to assemble.

The present invention thus relates to a heating device and a modular heating system comprising said device, as defined in essential terms in the appended claim 1.

Preferred additional features of the heating device and of the modular heating system comprising the device are defined in the dependent claims.

The heating device according to the invention is particularly efficient, in particular allowing the heat of the heating liquid to be exploited in full, while at the same time being easy to produce and assemble.

With the heating device according to the invention it is also possible to define modular heating systems in which the modules extend not only laterally, but also in depth (and possibly even in height).

Furthermore, according to the present invention, the modularity of the system is a characteristic that becomes manifest and concrete during the installation step, and not during the manufacturing step as is the case for certain modular products currently available on the market.

### BRIEF DESCRIPTION OF THE DRAWINGS

Further characteristics and advantages of the present invention will become clear from the description of the following non-limiting embodiments thereof, with reference to the figures of the accompanying drawings, in which:
- Figure 1 is a perspective view of a first embodiment of a heating device according to the invention;
- Figure 2 is a side view of the device shown in Figure 1;
- Figures 3 and 4 are two section views along the dashed lines III-III and IV-IV, respectively, of Figure 2;
- Figures 5 and 6 are, respectively, a rear view and a perspective view of an alternative embodiment of the device shown in Figure 1;
- Figures 7 and 8 are, respectively, a rear view and a side view of a further alternative embodiment of the device shown in Figure 1;
- Figures 9 and 10 are, respectively, a side view and a view from above, with some parts removed for the sake of clarity, of a modular system defined according to the invention with the device shown in Figure 1;
- Figure 11 is a purely schematic front view, with some parts removed for the sake of clarity, of a further modular system defined according to the invention;
- Figures 12A and 12B are exploded perspective views of respective connecting assemblies that can be used in the modular system according to the invention;
- Figure 13 is a perspective view of a detail of the modular system shown in Figures 9-10;
- Figure 14 is a side view of a second embodiment of a heating device according to the invention;
- Figures 15 and 16 are, respectively, a side view and a view from above, with some parts removed for the sake of clarity, of a modular system defined with the device shown in Figure 10;
- Figures 17 and 18 are, respectively, a side view and a view from above, with some parts removed for the sake of clarity, of another modular system defined with a further embodiment of the device according to the invention.

### BEST MODE FOR CARRYING OUT THE INVENTION

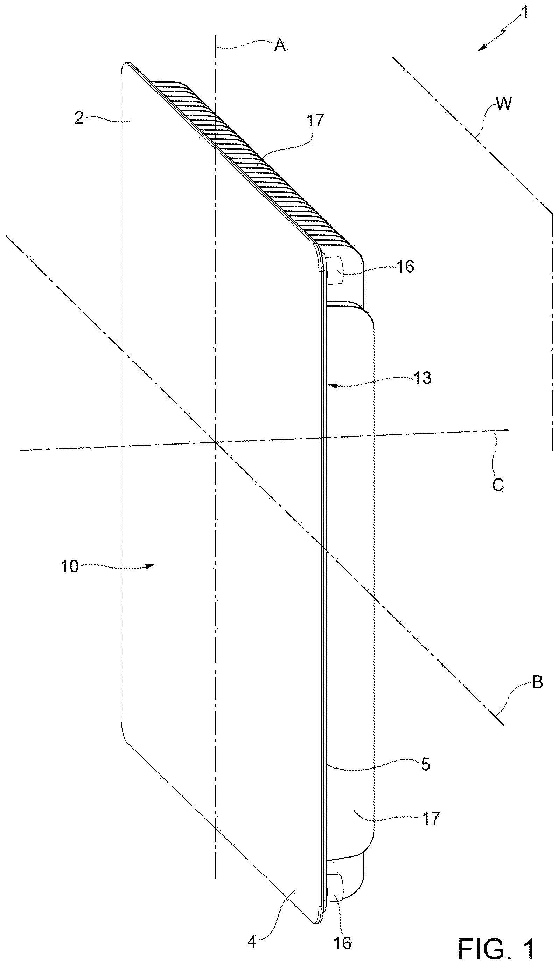

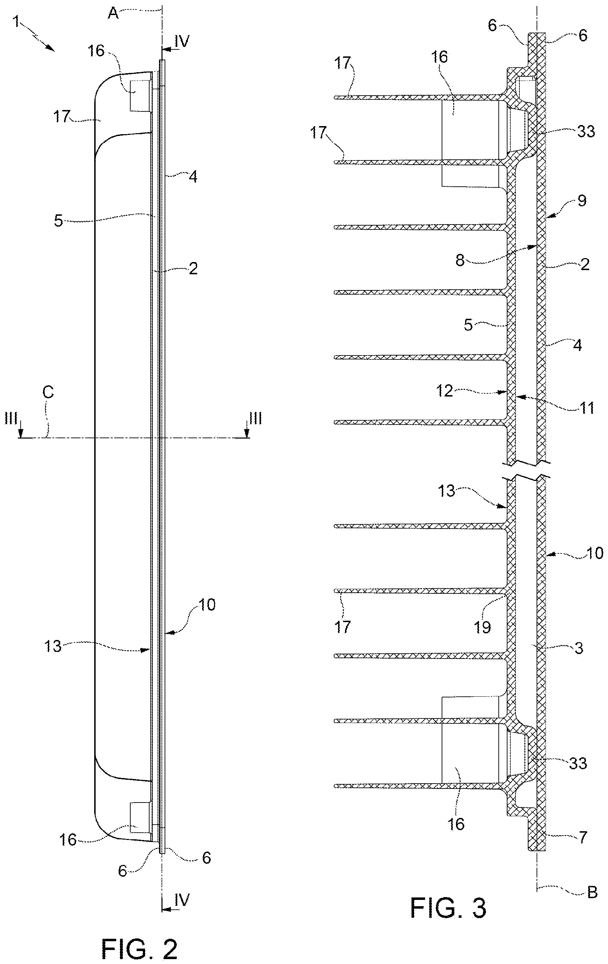

In Figures 1 and 2, denoted as a whole by reference numeral 1 is a heating device (for heating environments inside buildings) of the liquid circulation (for example, hot water) type.

The device 1 comprises a body 2 made of a heat conducting material, for example (but not necessarily) a metal material, in particular aluminium (said term also comprising aluminium alloys, i.e., alloys containing aluminium) and for example aluminium obtained by die-casting (i.e., made of aluminium or an alloy containing aluminium produced by means of a die-casting process). It is understood that the body 2 may be made of another material, provided it is suitable for conducting heat (such as ceramic, polymeric, composite and other materials), and produced by means of other production processes (for example, by means of an extrusion process).

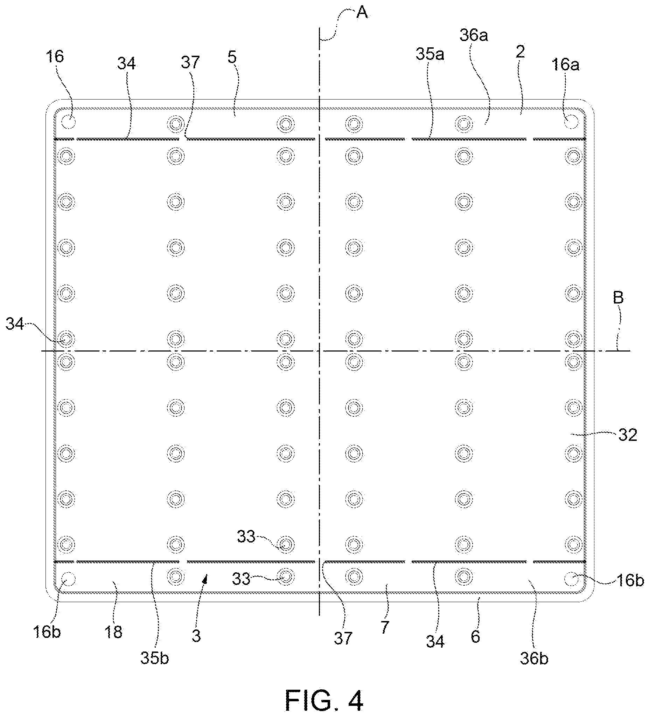

Also with reference to Figures 3 and 4, the body 2 is a hollow body and is provided with an inner chamber 3 (water chamber) in which a heating liquid (for example, hot water) circulates when in use.

The body 2 comprises a front heat exchange plate 4 and a rear heat exchange plate 5, positioned at respective opposite ends of the body 2 (precisely, with reference to the normal position of use of the device 1, a front end and a rear end) and substantially facing one another and joined along respective peripheral edges 6 which together form a closed loop perimeter edge 7 of the chamber 3.

In the example shown in Figures 1-4, the plates 4, 5 have a substantially quadrangular shape (being for example substantially square or rectangular), but it is understood that the plates 4, 5 may be of a different shape.

The front plate 4 has an inner face 8 facing the chamber 3 and wet by the heating liquid and which thus exchanges heat with the heating liquid in the chamber 3 (receiving heat from the heating liquid); and an outer face 9, opposite to the inner face 8 and defining a first heat exchange surface 10, in particular a main front heat exchange surface of the device 1, facing, when in use, the environment to be heated and which exchanges heat with the air in the environment in which the device 1 is installed (releasing heat into the air), in addition to releasing heat into the environment by radiation.

Likewise, the rear plate 5 has an inner face 11 facing the chamber 3 and wet by the heating liquid and which thus exchanges heat with the heating liquid in the chamber 3 (receiving heat from the heating liquid); and an outer face 12, opposite to the inner face 11 and defining a second heat exchange surface 13, facing, when in use, a supporting wall W to which the device 1 is fixed by fastening members (of a type known and not illustrated here for the sake of simplicity) and which exchanges heat with the air in the environment in which the device 1 is installed (releasing heat into the air).

The surface 10 defines a main front heat exchange surface of the device 1, facing the environment to be heated and opposite to the supporting wall W to which the device 1 is fixed.

The chamber 3 extends along a longitudinal axis A, vertical when in use, and a transverse axis B, horizontal when in use, defining, respectively, the height and width of the chamber 3; and along a third axis C, perpendicular to the longitudinal axis A and to the transverse axis B and defining the thickness of the chamber 3.

The chamber 3 is delimited at the front by the front plate 4 and precisely by the inner face 8 of the front plate 4 facing the chamber 3; and at the back by the rear plate 5 and precisely by the inner face 11 of the rear plate 5, facing the inner face 8 of the front plate 4.

The inner face 8 of the front plate 4 and the inner face 11 of the rear plate 5 face one another and are spaced apart so that the distance between them defines the thickness of the chamber 3.

The thickness of the chamber 3 is thus defined as the distance between the front plate 4 and the rear plate 5 and precisely between the inner face 8 of the front plate 4 and the inner face 11 of the rear plate 5.

The plates 4, 5 need not necessarily be plane and parallel as illustrated in Figures 1-4, but may have different shapes and be arranged differently: for example, one or both of the plates 4, 5 could be curved, corrugated, etc.; and/or the plates 4, 5 could slope towards one another. The chamber 3 may also have a variable (different) thickness (measured parallel to the axis C) along the longitudinal axis A and/or along the transverse axis B.

Preferably, as illustrated, the chamber 3 is a thin chamber, with a thickness that is smaller (in at least one or more parts of the chamber 3 if not throughout the chamber 3) with respect to the other dimensions (height and width) and with respect to at least one from between the height and the width.

In particular, in the embodiment that is illustrated (though not necessarily) the chamber 3 has a generally flattened shape and mainly extends along the longitudinal axis A, vertical when in use, and the transverse axis B, horizontal when in use, defining, respectively, the height and the width of the chamber 3; and the chamber 3 has a thickness, measured perpendicularly to the longitudinal axis A (vertical when in use) and to the transverse axis B (horizontal when in use), i.e., along the axis C (perpendicular to the longitudinal axis A and to the transverse axis B) which is smaller than the height and the width.

For example, the chamber 3 has a maximum thickness (thus considering the maximum thickness of the chamber 3, if the chamber 3 has a different thickness in different areas of the chamber 3) that is at least 20 times smaller, preferably 30 times smaller, more preferably at least 40 times smaller than each transverse dimension (measured in a direction perpendicular to the thickness), i.e. than the height and than the width, of the front plate 4.

Thus, with reference to the normal position of use of the device 1 (meaning the position in which the front plate 4 is substantially vertical and facing the environment to be heated), the chamber 3 has a height and a width each of which is at least 20 times greater, preferably at least 30 times greater and even more preferably at least 40 times greater than the thickness of the chamber 3.

In the example illustrated in Figures 1-4, the chamber 3 substantially extends on the entire front plate 4 with the exception of the peripheral edge 6 of the front plate 4 joined to the corresponding peripheral edge 6 of the rear plate 5.

In particular, the chamber 3 extends on at least 60% of the front plate 4: at least 60% of the surface of the inner face 8, facing the chamber 3, of the front plate 4 thus faces the chamber 3.

In other words, the chamber 3 occupies at least 60% of the inner face 8 of the front plate 4, i.e., the chamber 3 has a surface of contact with the inner face 8 of the front plate 4 (meaning the surface of the chamber 3 delimited on the inner face 8 of the front plate 4 from the perimeter edge 7 and thus excluding any spaces inside the chamber 3 occupied by internal elements such as spacers, ribs, structural reinforcements, flow conveyors, etc., which will be described later on) that is at least 60% of the overall surface of the inner face 8 of the front plate 4.

In other embodiments, the chamber 3 extends on at least 65%, or at least 70%, or at least 75%, or at least 80%, or at least 85%, or at least 90% of the surface of the inner face 8 of the front plate 4.

The body 2 is further provided with connections 16 extending from one or both of the plates 4, 5 and communicating with the chamber 3.

In the example in Figures 1-4, in particular, the connections 16 project from the rear plate 5 and precisely from the outer face 12 of the rear plate 5 and are substantially perpendicular to the rear plate 5 and to the outer face 12 of the rear plate 5.

In the example that is illustrated, the device 1 has four connections 16 positioned at respective corners of the chamber 3. It is nonetheless understood that the body 2 may be provided with a different number of connections 16, also arranged in other positions, not necessarily at the corners of the chamber 3. Preferably, but not necessarily, the connections 16 are positioned along the perimeter edge 7 of the chamber 3.

The connections 16 are defined by respective sleeves, for example but not necessarily substantially cylindrical (but the sleeves may also have a different shape), and their purpose is to connect the device 1 to an external hydraulic circuit (not illustrated) and/or to connect the device 1 to other identical devices to define a modular system (as described later on in this document).

The connections 16 that are not used to connect the device 1 to another identical device to define a modular system or to connect the device 1 to the external hydraulic circuit are closed by plugs (not illustrated).

In general, the chamber 3 has at least one inlet 16a and one outlet 16b defined by respective connections 16.

In the example that is illustrated, the front plate 4 and the rear plate 5 are both substantially plane and parallel; it is understood that the front plate 4 and/or the rear plate 5, like their faces, may have a different shape, for example curved, corrugated, etc.

The outer face 9 of the front plate 4 is, for example, substantially smooth.

In the embodiment illustrated in Figures 1-4, the rear plate 5 supports a plurality of heat exchange fins 17 which extend outside the chamber 3 from the rear plate 5 and precisely from the outer face 12 of the rear plate 5.

In the non-limiting example that is illustrated, the fins 17 are substantially perpendicular to the outer face 12 of the rear plate 5 and parallel to one another and to the longitudinal axis A (vertical when in use). It is understood that the fins 17 may be formed and arranged differently, i.e., the fins 17 may have a different shape, they may be oriented in a different way, arranged differently with respect to one another compared with that illustrated merely by way of example.

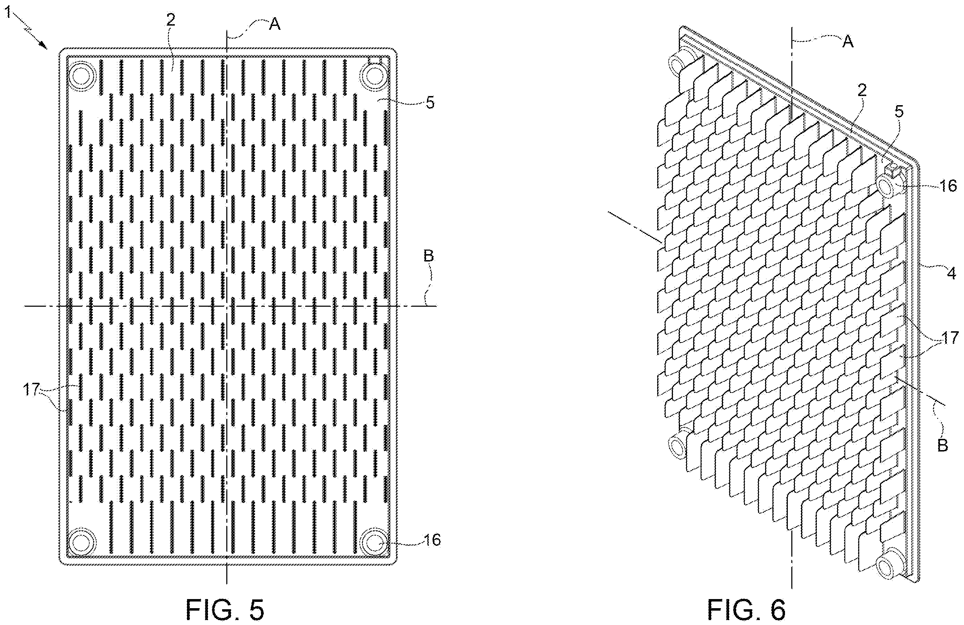

For example, in the alternative embodiments illustrated in Figures 5-6, the fins 17 are arranged in parallel rows and the fins in adjacent rows are staggered with respect to one another.

In particular, the fins 17 are arranged in rows parallel to the axis A, and the fins on each row are spaced longitudinally (parallel to the axis A) apart from one another, and also laterally (parallel to the axis B) from the fins of the adjacent rows.

The fins 17 may differ from one another in size: in particular, the fins 17 may comprise fins of different lengths (measured parallel to the axis A), and/or of different heights (measured parallel to the axis C).

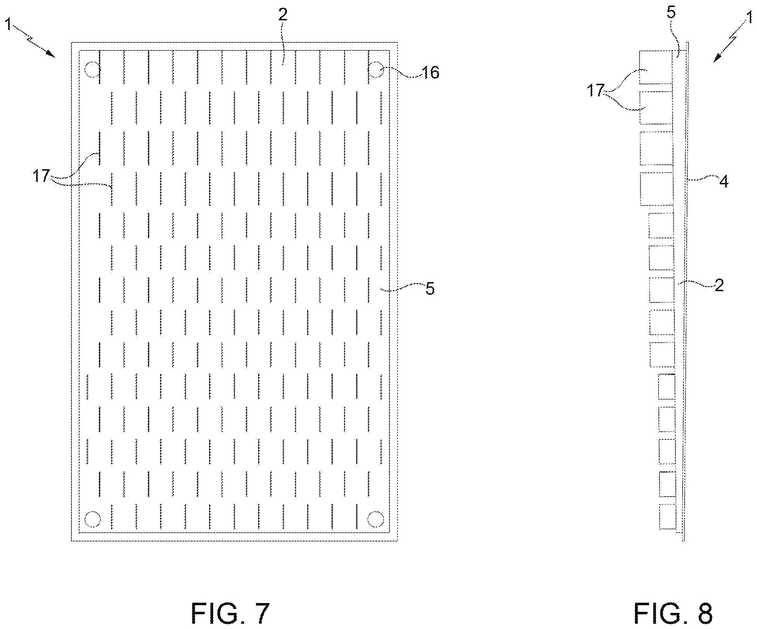

For example, in the alternative embodiment illustrated in Figures 7-8, the fins 17 are again arranged in rows parallel to the axis A and the fins in each row (or in some rows) differ in height. In particular, at least some rows (or all of the rows) comprise single fins or groups of fins having respective different heights: the height of the fins increases towards a top end of the device 1.

Moreover, at least some fins in at least some rows also differ in length. In particular, at least some rows (or all of the rows) comprise single fins or groups of fins having respective different lengths.

Preferably, as illustrated in Figures 1-8, all of the fins 17 extend directly from the chamber 3, since they are joined directly to a wet wall 18 of the chamber 3, in this case defined by the rear plate 5, so that all of the fins 17 are so-called "wet fins". All of the fins 17 have a root edge 19 joined to the wet wall 18 of the chamber 3, which comes directly into contact with the heating liquid.

The front plate 4 and the rear plate 5, with the respective peripheral edges 6 shaped so as to couple with one another, are advantageously formed of respective monolithic pieces, made for example of aluminium obtained by means of a die-casting process; the two pieces that make up the two plates 4, 5 are then joined along the respective peripheral edges 6, so as to form a mechanical and fluid-tight joint.

Advantageously, the plates 4, 5 are joined by means of a thermo-electric melting process, performed by circulating current through respective contact portions of the pieces to be joined to cause the local melting thereof, without the contribution of welding material (as described in international patent application WO2014/155295).

The plates 4, 5 may, however, be joined in other ways, for example by means of mechanical joining methods (possibly with the interposition of sealing gaskets), gluing, other types of welding (not necessarily electromagnetic), etc.

Advantageously, the fins 17 are made as an integral part of the plate 5 from which they project so as to form a monolithic piece therewith (i.e., the fins are not borne by or joined to the plate 5, but are made directly with the plate 5, for example during an extrusion or die-casting step).

Inside the chamber 3 there are ties 33, i.e., projections that extend between the front plate 4 and the rear plate 5 and are integral with (firmly joined to or made as a single piece with) the inner face 8 of the front plate 4 and with the inner face 11 of the rear plate 5.

In the example that is illustrated, the ties 33 are made as a single piece with one of the plates 4, 5 and extend towards the opposite plate, to which they are joined, for example, by means of welding or thermo-melting when the plates 4, 5 are joined to one another to form the device 1, in particular by means of a local thermo-electric melting process on each tie 33 (but it is understood that the plates 4, 5, as already mentioned, may be joined to one another in other ways); in particular, the ties 33 are shaped as protuberances on the inner face 11 of the rear plate 5 (and are made for example by being die-cast with the plate 5) and are welded to the inner face 8 of the front plate 4. Alternatively, the ties 33 may be made separately and welded to the two plates 4, 5; or even made as integral parts of both of the plates 4, 5.

Essentially, depending on the technology used in the production of the body 2, the ties 33 may be defined directly as integral parts of both of the plates 4, 5; or as integral parts of one of the plates 4, 5 which are then joined (welded) to the other plate; or as separate components which are then joined (welded) to both of the plates 4, 5.

The ties 33 are distributed on the faces 8, 11 and their main function is to increase the mechanical resistance of the device 1, in particular to improve its resistance to pressure. The ties 33 also contribute to making the device 1 fluid tight, in that they contribute to keeping the two plates 4, 5 joined together so as to prevent any leakage of liquid.

Since the ties 33 are inserted along the path of the heating liquid in the chamber 3, they also have a function of distributing the heating liquid in the chamber 3.

In general, advantageously but not necessarily, the chamber 3 houses between the two plates 4, 5 internal elements 34 (which may also include the ties 33) which act on the flow of the heating liquid circulating in the chamber 3, for example to define one or more paths in the chamber 3, to distribute the heating liquid in the chamber 3, to modify the motion of the heating liquid in the chamber 3, etc.

In particular, the elements 34 (or at least some of the elements 34) are shaped and arranged so as to aid the even distribution of the water in the chamber 3.

In the preferred embodiment illustrated in Figure 4, the elements 34 comprise, in addition to the ties 33, a first distributor 35a, positioned at a top end 36a of the chamber 3, and/or a second distributor 35b, positioned at a bottom end 36b of the chamber 3 (again with reference to the normal position of use of the device 1: the ends 36a, 36b are axially opposite ends with respect to the longitudinal axis A).

The distributors 35a, 35b are defined by respective transverse walls, for example substantially parallel to the axis B (or slanting with respect to the axis B, or curved or even differently shaped) which extend between the inner face 8 of the front plate 4 and the inner face 11 of the rear plate 5 and between two lateral opposite sides of the chamber 3 and are provided with respective series of longitudinally spaced through apertures 37. The distributor 35a is positioned close to and below an inlet 16a, defined by one of the sleeves 16 and positioned at the top end 36a of the chamber 3. The distributor 35a is positioned close to and below an inlet 16a, defined by a first connection 16 positioned at the top end 36a of the chamber 3; and the distributor 35b is positioned close to and above at least one outlet 16b, defined by another connection 16 positioned at the bottom end 36b of the chamber 3.

In the preferred embodiment illustrated in Figure 4, the chamber 3 has an inlet 16a, defined by a first connection 16 positioned at a top end of the chamber 3; and two outlets 16b, defined by respective further connections 16 positioned at the bottom end of the chamber 3 and at respective opposite lateral ends of the chamber 3. In use, the heating liquid enters the chamber 3 through the inlet 16a and flows out through both of the outlets 16b, after being distributed substantially evenly inside the chamber thanks to the distributors 35a, 35b.

The chamber 3 may also house just one of the distributors 35a, 35b. The shape of the distributors 35a, 35b may also differ from that illustrated and described here purely by way of example.

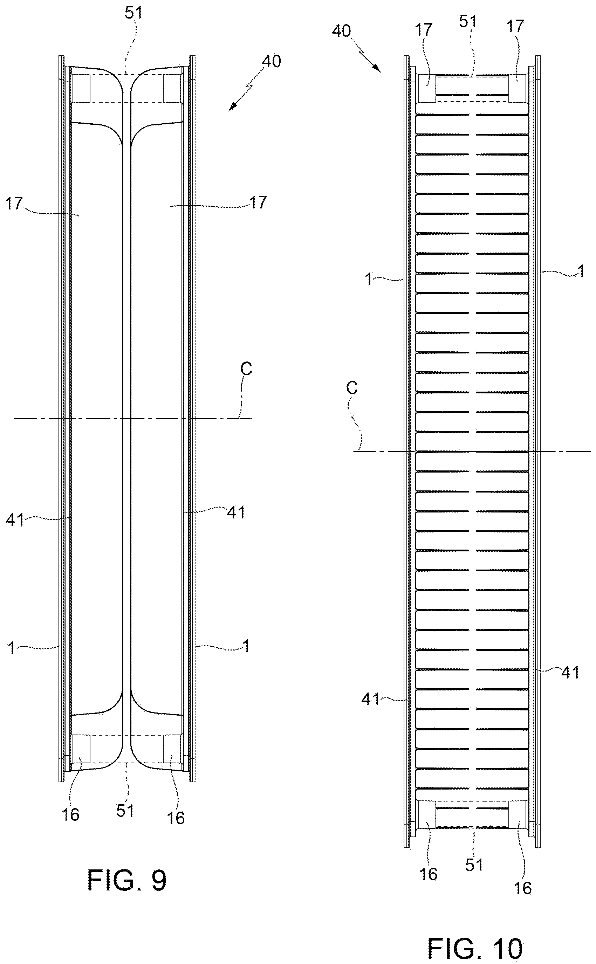

A modular heating system 40 according to the invention is illustrated for example in Figures 9 and 10.

The system 40 comprises two modules 41 defined by respective devices 1 described above.

The two devices 1, i.e., the two modules 41, are positioned one behind the other with the respective front plates 4 arranged substantially parallel to one another and aligned along the axis C (axis perpendicular to the front plates 4 and perpendicular to the longitudinal axis A and to the transverse axis B).

The two devices 1 are arranged so that the respective connections 16 and the respective fins 17 are facing and aligned with one another.

With reference to the normal position of use of the system 40, where the front plates 4 of the devices 1 are substantially vertical, the modules 41 are positioned one behind the other in the direction of the thickness of the system 40 (along the axis C), thus defining a modular system extending in depth.

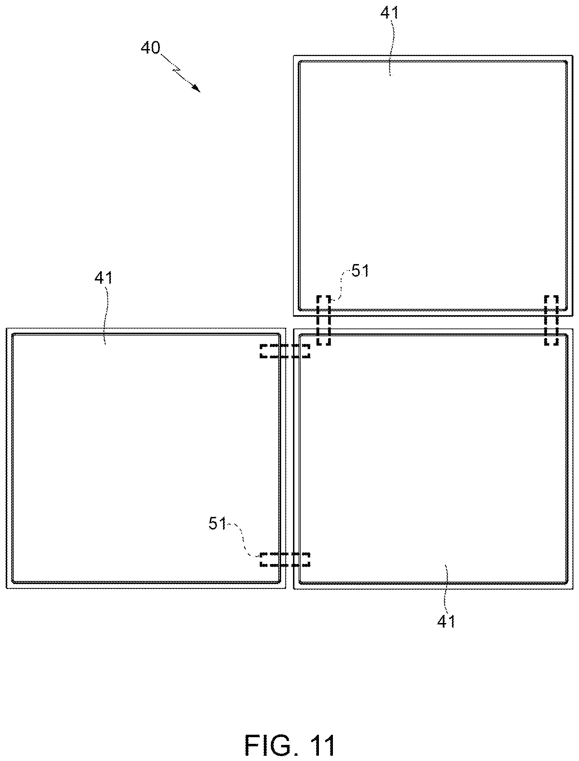

The system 40 may also extend in width and/or in height, since several modules 41 (or groups of modules 41) can also be positioned side by side along the transverse axis B and/or along the longitudinal axis A, as schematically illustrated in Figure 11.

Ultimately, the system 40 may comprise modules 41 (two or more, any number) positioned adjacent to one another along one, two or three axes perpendicular to one another to form, with reference to the normal position of use of the system 40, a modular system extending in height, width and/or depth.

The modules 41 are joined by means of connecting groups 51 (only schematically illustrated by dashed lines in Figures 9-11), which join pairs of connections 16 of respective devices 1.

Each connecting group 51 extends along an axis X and has a pair of opposite end apertures 52, positioned at respective opposite axial ends of the connecting group 51 for connection to respective modules 41, and a lateral aperture 53, arranged between the end apertures 52, for connection to an external duct of the hydraulic circuit.

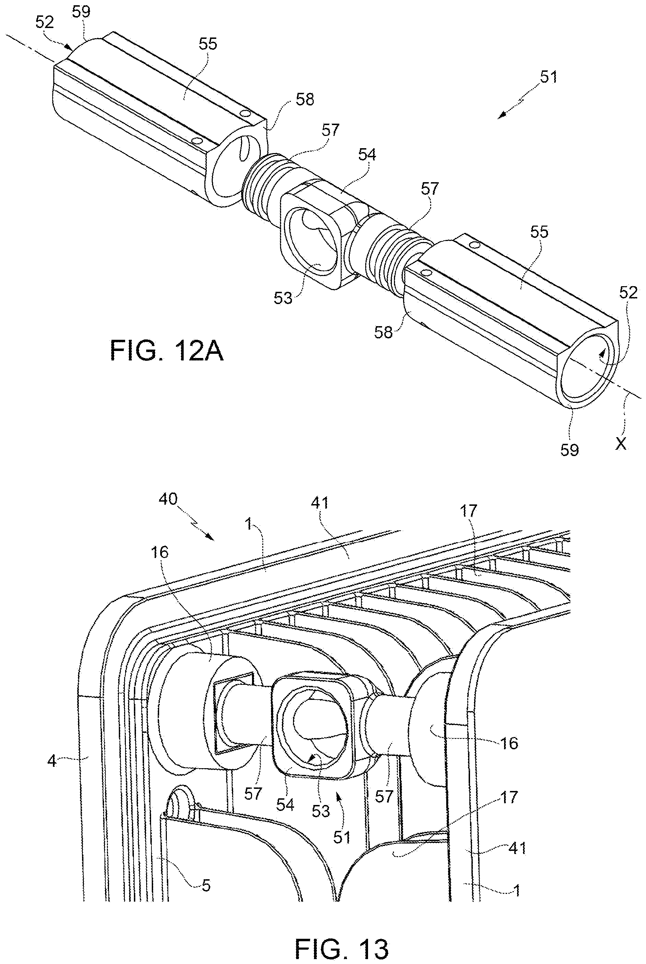

As illustrated by way of example in Figure 12A, two modules 41 extending in the direction of the depth or thickness of the system 40 and thus facing and aligned with one another along the axis C (Figures 9-10) are advantageously connected by a substantially linear connecting group 51 in which the end apertures 52 are axial apertures substantially perpendicular to the axis X and the lateral aperture 53 is a radial aperture with respect to the axis X.

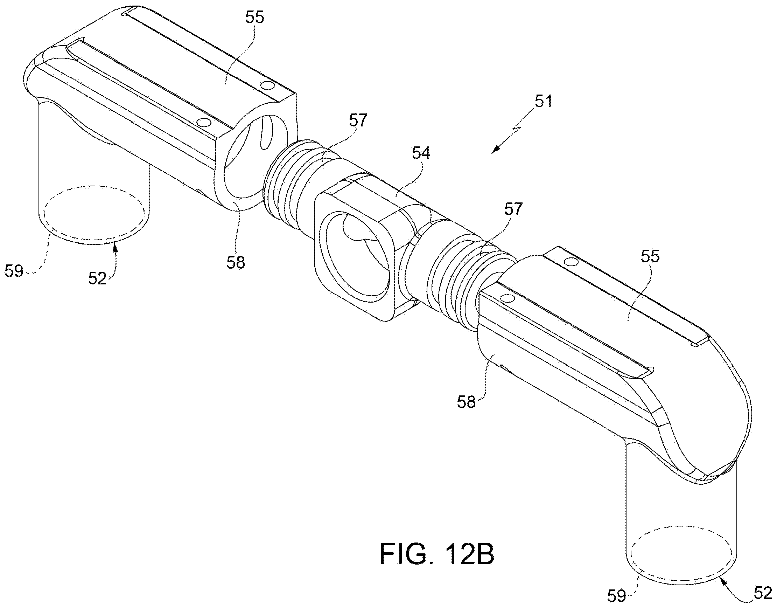

As illustrated by way of example in Figure 12B, two modules 41 extending instead in the direction of the width or height of the system 40 and thus arranged laterally or vertically alongside one another along the longitudinal axis A or the transverse axis B (Figure 11) are advantageously connected by a substantially C-shaped connecting group 51 in which the end apertures 52 are radial apertures with respect to the axis X, as is the lateral aperture 53.

In the examples in Figures 12A-12B, each connecting group 51 comprises a T-shaped and internally hollow central body 54, provided with the lateral aperture 53, and a pair of pipes 55 which extend from respective opposite arms 57 of the body 54 and communicate internally with them.

The pipes 55 have respective proximal ends 58 joined to the body 54; and respective distal ends 59 provided with the end apertures 52 and which can be inserted directly into the connections 16 or are joined to the connections 16, for example by means of nipples.

Advantageously, the body 54 is rotatable about the axis X with respect to the pipes 55, but it may also be locked in an angularly fixed position with respect to the pipes 55, for example using radial pins.

The connecting group 51 may include sealing rings to guarantee the fluid-tight connection between the pipes 55 and the body 54, and between the pipes 55 and the connections 16.

Alternatively, as illustrated in Figure 13, the body 54 may be fitted directly to the connections 16, by directly inserting the arms 57 into respective connections 16 (thus without using the pipes 55).

In that case, the end apertures 52 communicating with the connections 16 are obtained directly on the arms 57 (instead of on the pipes 55). In any case, the apertures 52 are axially oriented with respect to the axis X, since they are aligned along the axis X and substantially perpendicular to the axis X.

To connect modules 41 laterally or vertically, the pipes 55 (Figure 12B) are L-shaped with the distal ends 59 at an elbow bend with respect to the proximal ends 58, so that the end apertures 52 are oriented radially with respect to the axis X.

Optionally, in addition to being used for the hydraulic connection, the connecting groups 51 are also used to plug the connections 16 and/or as spacing elements between the connections 16 of adjacent modules 41.

It is important to point out that, as already stated, according to the present invention the assembly of the modules 41 to define the modular system 40 of the invention is performed in the installation step, that is, directly at the time of installation in the room/environment to be heated; the modularity of the system 40 according to the invention is thus a characteristic that becomes manifest and concrete during the installation step, and not during the manufacturing step (as is the case for the known modular systems extending in depth).

Furthermore, as a general rule, a plurality of modules 41 can be connected to extend in depth, even a large number, not just two as illustrated purely by way of example in Figures 9-10.

Moreover, as already stated, the modules 41 can be joined not only to extend in depth, but also to extend in width (laterally) and in height (vertically), i.e., horizontally and vertically with respect to the position of use. Ultimately, modular systems 40 can be assembled in which the modules 41 are arranged in succession along one, two or three directions orthogonal to one another (height, width and depth).

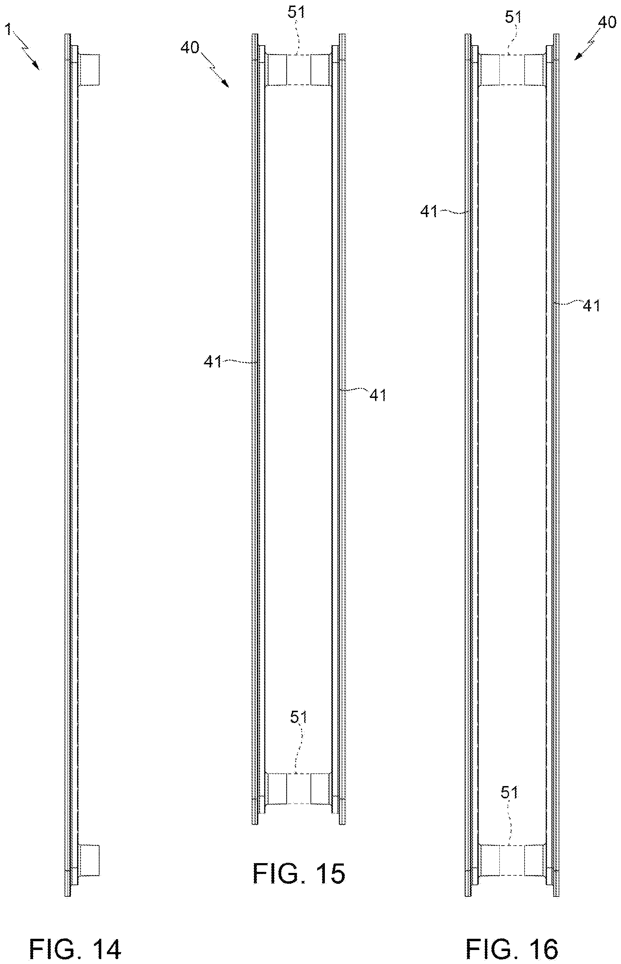

Figure 14, in which details similar or identical to those already described are denoted by the same reference numerals, shows an alternative embodiment of the device according to the invention.

With respect to the above description referring to Figures 1-4, the device 1 illustrated in Figure 14 does not comprise fins and thus the outer face 12 of the rear plate 5 is also substantially smooth, like the outer face 9 of the front plate 4 (thus not provided with fins).

The device 1 shown in Figure 14 may in turn be used as a module 41 in a modular heating system 40, as illustrated in Figures 15 and 16, again using connecting groups 51 like those already described (or others of a similar type) to connect two modules 41.

In this case the system 40 is defined by two modules 41, i.e., by two identical and counterposed devices 1.

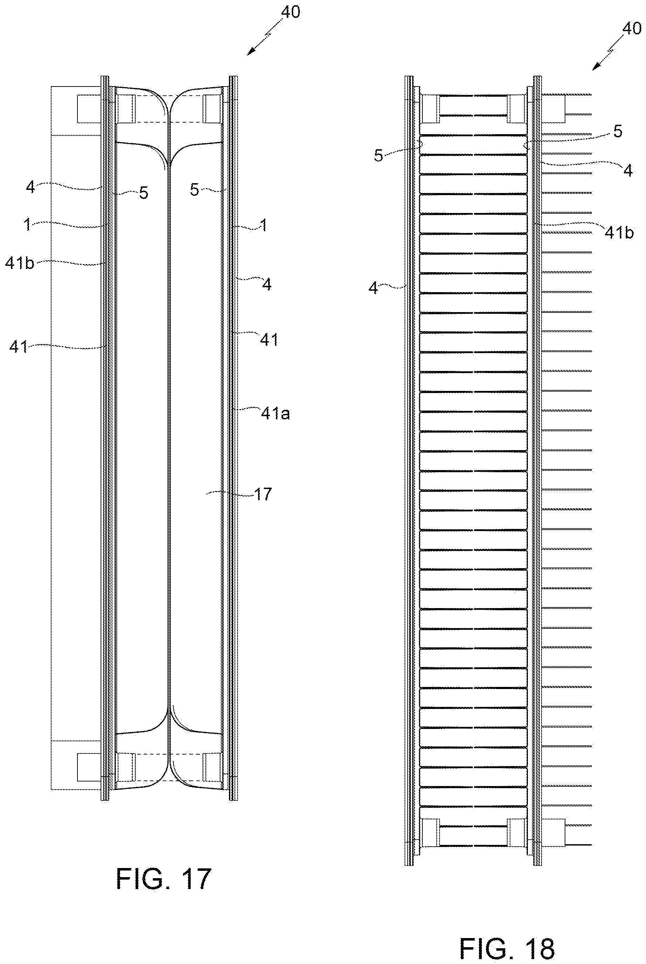

A further alternative embodiment is illustrated in Figures 17 and 18, where details similar or identical to those already described are again denoted by the same reference numerals.

Figures 17-18 illustrate a modular system 40 composed of two modules 41: a first module 41a consists of a device of the type described with reference to Figures 1-4 and thus having a substantially smooth front plate 4 (not provided with fins) which constitutes a front surface of the device 1 and of the entire system 40 and when in use faces the environment to be heated, and a rear plate 5 provided with heat exchange fins 17; a second module 41b is, unlike in the device shown in Figures 1-4, provided with fins 17 not only on the outer face 12 of the rear plate 5, but also on the outer face 9 of the front plate 4.

Thus, as already illustrated, it is possible to connect not just two modules 41 extending in depth, but a plurality of modules 41, and even to combine devices 1 having the characteristics of the various embodiments described previously, depending on the required performance.

It is possible to combine modules 41 composed of devices 1 that are identical to one another or even different from one another

For example, it is possible to define three base modules 41, made up of devices 1 in which, respectively:
1) both of the heat exchange surfaces 10, 13 (i.e., the outer faces 9, 12 of the plates 4, 5) are substantially smooth, that is, not provided with heat exchange fins;
2) just one of the heat exchange surfaces 10, 13 (i.e., one of the outer faces 9, 12 of the plates 4, 5) is substantially smooth (not provided with fins), while the other is a finned surface (provided with heat exchange fins);
3) both of the heat exchange surfaces 10, 13 are finned surfaces (provided with respective heat exchange fins) .

These modules 41 can be variously combined with one another 10, to form:
- completely smooth systems (all of the heat exchange surfaces 10, 13 are smooth),
- completely finned systems (all of the heat exchange surfaces 10, 13 are finned),
- mixed surfaces (smooth and finned heat exchange surfaces 10, 13).

If the system 40 comprises a single finned module 41 or in any case has a finned surface 10 with the fins 17 facing towards the environment to be heated, an aesthetic cover can also be placed in front of the fins 17 to cover said fins 17.

Lastly, it is understood that further modifications and variations can be made to the heating device and to the modular heating system described and illustrated herein without departing from the scope of the invention as set forth in the appended claims.

## Claims

1. A liquid circulation heating device (1) for modular assembly in the installation step, comprising at least one body (2) provided with an inner chamber (3), in which a heating liquid can circulate, and with a front plate (4), having an outer face (9) facing in use the space to heat and defining a first heat exchange surface (10), and a rear plate (5), opposite to the front plate (4) and delimiting the chamber (3) at the back; and four connections (16) communicating with the chamber (3) and extending from the body (2); wherein the front plate (4) delimits the chamber (3) at the front and has an inner face (8), opposite to the outer face (9) and facing the chamber (3) and wettable by the heating liquid; and the rear plate (5) has an inner face (11), facing the chamber (3) and wettable by the heating liquid, and an outer face (12), opposite to the inner face (11) and defining a second heat exchange surface (13), which can face, in use, a supporting wall (W) to which the device (1) can be fixed by fastening members; the chamber (3) being delimited at the front by the inner face (8) of the front plate (4) and at the back by the inner face (11) of the rear plate (5); wherein the inner face (8) of the front plate (4) and the inner face (11) of the rear plate (5) face one another and are spaced apart so that the distance between said inner faces (8, 11) defines the thickness of the chamber (3); and the rear plate (5) supports a plurality of heat exchange fins (17) which extend outside the chamber (3) from said outer face (12) of the rear plate (5) and are integral and form a monolithic piece with the rear plate (5); and the four connections (16) project from the rear plate (5); wherein all of the fins (17) extend directly from the chamber (3) and are joined directly to a wet wall (18) of the chamber (3) so that all of the fins (17) are wet fins having a root edge (19) joined to the wet wall (18) of the chamber (3), which can come directly into contact with the heating liquid; and the connections (16) are substantially perpendicular to said rear plate (5) so as the device (1) is configured so as to be able to be connected to other devices (1), by means of connecting groups (51) which can join pairs of connections (16) of respective devices (1), and to be able to assembly a modular system (40) which can be assembled in modular form in the installation step in a room/environment to heat and which can extend, with reference to the normal position of use of the system (40), in height, width and/or depth.

2. A device according to claim 1, wherein the connections (16) are positioned substantially along a perimeter edge (7) of the chamber (3).

3. A device according to one of the preceding claims, wherein the chamber (3) extends on at least 60%, or at least 65%, or at least 70%, or at least 75%, or least 80%, or at least 85%, or at least 90% of the surface of the inner face (8) of the front plate (4).

4. A device according to one of the preceding claims, wherein the chamber (3) is a thin chamber having a thickness, in at least one or more parts of the chamber (3), that is less than at least one of the height and the width.

5. A device according to one of the preceding claims, wherein the chamber (3) has a substantially flat shape and extends predominantly along a longitudinal axis (A), vertical in use, and a transverse axis (B), horizontal in use, defining the height and the width of the chamber (3), respectively; and the chamber (3) has a thickness, measured perpendicular to said longitudinal axis (A) and to said transverse axis (B), that is less than the height and the width

6. A device according to one of the preceding claims, wherein with reference to the normal position of use of the device (1), in which the front plate (4) is substantially vertical and faces the space to heat, the chamber (3) has a height and a width each of which is at least 10 times greater, preferably at least 20 times greater or at least 30 times greater than the thickness of the chamber (3).

7. A device according to one of the preceding claims, wherein the front plate (4) is provided with other heat exchange fins (17), which are integral and form a monolithic piece with the front plate (4) from which they project.

8. A device according to one of the preceding claims, wherein the front plate (4) is substantially smooth and the rear plate (5) is provided with heat exchange fins (17), or the front plate (4) and the rear plate (5) are provided with respective heat exchange fins (17); and in the case in which the front plate (4) is provided with heat exchange fins (17) and thus the first heat exchange surface (10), can face in use the space to heat, is a finned surface, an aesthetic cover is positioned in front of said heat exchange fins (17) to cover said heat exchange fins (17).

9. A device according to one of the preceding claims, wherein the body (2) is made of two monolithic pieces joined along respective peripheral edges (6).

10. A device according to one of the preceding claims, wherein each of the plates (4, 5) is substantially flat or curved or corrugated; and/or the plates (4, 5) are substantially parallel or slanted with respect to each other.

11. A device according to one of the preceding claims, wherein the chamber (3) houses between the two plates (4, 5) internal elements (34), which act on the flow of the heating liquid circulating in the chamber (3) and are shaped and/or arranged so as to aid an even distribution of the heating liquid in the chamber (3).

12. A device according to claim 11, wherein the elements (34) comprise a first distributor (35a), positioned at a top end (36a) of the chamber (3), and/or a second distributor (35b), positioned at a bottom end (36b) of the chamber (3).

13. A device according to one of the preceding claims, wherein inside the chamber (3) there are ties (33) which extend between the front plate (4) and the rear plate (5) and are integral with respective inner faces (8, 11) of the front plate (4) and the rear plate (5).

14. A modular heating system (40), comprising two or more modules (41) defined by respective devices (1) according to one of the preceding claims, positioned adjacent to one another along one, two or three axes orthogonal to one another to form, with reference to the normal position of use of the system (40), a modular system extending in height, width and/or depth.

15. A system according to claim 14, wherein the modules (41) are positioned, with reference to the normal position of use of the system (40), one behind the other in the direction of the thickness of the system (40), defining a modular system extending in depth; and/or laterally and/or vertically beside one another, defining a modular system extending in width and/or height.

16. A system according to claim 14 or 15, wherein the modules (41) are connected by connecting groups (51) which join pairs of connections (16) of respective devices (1) facing and aligned with each other; and/or by connecting groups (51) which join pairs of connections (16) of respective devices (1) arranged laterally or vertically side-by-side.

17. A system according to one of claims 14 to 16, comprising at least two modules (41) which, with reference to the normal position of use of the system (40), are positioned, one behind the other in the direction of the thickness of the system (40), defining a modular system extending in depth; each of said modules (41) having a front plate (4) with no exchange fins and a rear plate (5) provided with heat exchange fins (17), or having a front plate (4) and a rear plate (5) provided with respective heat exchange fins (17).

18. Use of a device according to one of claims 1 to 13 for heating indoor rooms/environments, wherein the device (1) is fixed by fastening members to a supporting wall (W) and positioned with the outer face (9) of the front plate (4) facing the space to heat, and the outer face (12) of the rear plate (5) facing the supporting wall (W) .

19. Use according to claim 18, wherein the device (1) is connected to other devices (1), by means of connecting groups (51) which join pairs of connections (16) of respective devices (1), so as to assembly a modular system (40) in modular form in the installation step in the room/environment to heat and which extends, with reference to the normal position of use of the system (40), in height, width and/or depth.

## Patentansprüche

1. Flüssigkeitszirkulationsheizvorrichtung (1) zur modularen Montage im Installationsschritt, die mindestens einen Körper (2) umfasst, der mit einer inneren Kammer (3), in der eine Heizflüssigkeit zirkulieren kann, und mit einer vorderen Platte (4), die eine Außenfläche (9) aufweist, die im Gebrauch dem zu beheizenden Raum zugewandt ist und eine erste Wärmeaustauschoberfläche (10) bestimmt, und einer hinteren Platte (5), die der vorderen Platte (4) entgegengesetzt ist und die Kammer (3) an der Rückseite begrenzt, versehen ist; und vier Anschlüsse (16) umfasst, die mit der Kammer (3) kommunizieren und sich von dem Körper (2) erstrecken; wobei die vordere Platte (4) die Kammer (3) an der Vorderseite begrenzt und eine Innenfläche (8) aufweist, die der Außenfläche (9) entgegengesetzt ist und der Kammer (3) zugewandt ist und mit der Heizflüssigkeit benetzbar ist; und wobei die hintere Platte (5) eine Innenfläche (11), die der Kammer (3) zugewandt ist und mit der Heizflüssigkeit benetzbar ist, und eine Außenfläche (12) aufweist, die der Innenfläche (11) entgegengesetzt ist und eine zweite Wärmeaustauschoberfläche (13) bestimmt, die, im Gebrauch, einer Stützwand (W) zugewandt sein kann, an der die Vorrichtung (1) über Befestigungsglieder fixiert werden kann; wobei die Kammer (3) an der Vorderseite von der Innenfläche (8) der vorderen Platte (4) und an der Rückseite von der Innenfläche (11) der hinteren Platte (5) begrenzt wird; wobei die Innenfläche (8) der vorderen Platte (4) und die Innenfläche (11) der hinteren Platte (5) einander zugewandt sind und so beabstandet sind, dass der Abstand zwischen den Innenflächen (8, 11) die Dicke der Kammer (3) bestimmt; und wobei die hintere Platte (5) eine Vielzahl von Wärmeaustauschrippen (17) stützt, die sich außerhalb der Kammer (3) von der Außenfläche (12) der hinteren Platte (5) erstrecken und einstückig ausgebildet sind und ein monolithisches Teil mit der hinteren Platte (5) bilden; und wobei die vier Anschlüsse (16) von der hinteren Platte (5) vorstehen; wobei sich alle der Rippen (17) direkt von der Kammer (3) erstrecken und direkt mit einer Feuchtwand (18) der Kammer (3) verbunden sind, sodass alle der Rippen (17) Feuchtrippen, die eine mit der Feuchtwand (18) der Kammer (3) verbundene Wurzelkante (19) aufweisen, sind, die direkt in Kontakt mit der Heizflüssigkeit kommen können; und wobei die Anschlüsse (16) im Wesentlichen senkrecht zu der hinteren Platte (5) sind, sodass die Vorrichtung (1) so ausgestaltet ist, dass sie in der Lage ist mittels Anschlussgruppen (51), die Paare von Anschlüssen (16) jeweiliger Vorrichtungen (1) miteinander verbinden können, an anderen Vorrichtungen (1) angeschlossen zu werden, und in der Lage ist, ein modulares System (40) zu montieren, das in modularer Form im Installationsschritt in einem zu beheizenden Raum / einer zu beheizenden Umgebung montiert werden kann, und das sich, in Bezug auf die normale Gebrauchsposition des Systems (40), in der Höhe, der Breite und/oder der Tiefe erstrecken kann.

2. Vorrichtung nach Anspruch 1, wobei die Anschlüsse (16) im Wesentlichen entlang einer Umfangskante (7) der Kammer (3) positioniert sind.

3. Vorrichtung nach einem der vorhergehenden Ansprüche, wobei sich die Kammer (3) auf mindestens 60 % oder mindestens 65 % oder mindestens 70 % oder mindestens 75 % oder mindestens 80 % oder mindestens 85 % oder mindestens 90 % der Oberfläche der Innenfläche (8) der vorderen Platte (4) erstreckt.

4. Vorrichtung nach einem der vorhergehenden Ansprüche, wobei die Kammer (3) eine dünne Kammer ist, die, in zumindest einem oder mehreren Teilen der Kammer (3), eine Dicke aufweist, die geringer als zumindest eine von der Höhe und der Breite ist.

5. Vorrichtung nach einem der vorhergehenden Ansprüche, wobei die Kammer (3) eine im Wesentlichen flache Form aufweist und sich vorwiegend entlang einer Längsachse (A), die im Gebrauch vertikal ist, und einer Querachse (B), die im Gebrauch horizontal ist, erstreckt, die jeweils die Höhe und die Breite der Kammer (3) bestimmen; und die Kammer (3) eine Dicke aufweist, die, senkrecht zu der Längsachse (A) und zu der Querachse (B) gemessen, geringer als die Höhe und die Breite ist.

6. Vorrichtung nach einem der vorhergehenden Ansprüche, wobei die Kammer (3), in Bezug auf die normale Gebrauchsposition der Vorrichtung (1), in der die vordere Platte (4) im Wesentlichen vertikal ist und dem zu beheizenden Raum zugewandt ist, eine Höhe und eine Breite aufweist, die jeweils mindestens 10-mal größer, vorzugsweise mindestens 20-mal größer oder mindestens 30-mal größer, als die Dicke der Kammer (3) sind.

7. Vorrichtung nach einem der vorhergehenden Ansprüche, wobei die vordere Platte (4) mit anderen Wärmeaustauschrippen (17) versehen ist, die einstückig ausgebildet sind und ein monolithisches Teil mit der vorderen Platte (4) bilden, von der sie vorstehen.

8. Vorrichtung nach einem der vorhergehenden Ansprüche, wobei die vordere Platte (4) im Wesentlichen glatt ist und die hintere Platte (5) mit Wärmeaustauschrippen (17) versehen ist, oder die vordere Platte (4) und die hintere Platte (5) mit jeweiligen Wärmeaustauschrippen (17) versehen sind; und wobei, in dem Fall, in dem die vordere Platte (4) mit Wärmeaustauschrippen (17) versehen ist und die erste Wärmeaustauschoberfläche (10), die im Gebrauch dem zu beheizenden Raum zugewandt sein kann, somit eine gerippte Oberfläche ist, eine ästhetische Abdeckung vor den Wärmeaustauschrippen (17) positioniert ist, um die Wärmeaustauschrippen (17) zu bedecken.

9. Vorrichtung nach einem der vorhergehenden Ansprüche, wobei der Körper (2) aus zwei monolithischen Teilen hergestellt ist, die entlang jeweiliger Umfangskanten (6) miteinander verbunden sind.

10. Vorrichtung nach einem der vorhergehenden Ansprüche, wobei jede der Platten (4, 5) im Wesentlichen flach oder gekrümmt oder gewellt ist; und/oder die Platten (4, 5) im Wesentlichen zueinander parallel oder geneigt sind.

11. Vorrichtung nach einem der vorhergehenden Ansprüche, wobei die Kammer (3) zwischen den zwei Platten (4, 5) interne Elemente (34) aufnimmt, die auf den Strom der Heizflüssigkeit, die in der Kammer (3) zirkuliert, einwirken und so geformt und/oder angeordnet sind, dass sie eine gleichmäßige Verteilung der Heizflüssigkeit in der Kammer (3) unterstützen.

12. Vorrichtung nach Anspruch 11, wobei die Elemente (34) einen ersten Verteiler (35a), der an einem oberen Ende (36a) der Kammer (3) positioniert ist, und/oder einen zweiten Verteiler (35b), der an einem unteren Ende (36b) der Kammer (3) positioniert ist, umfassen.

13. Vorrichtung nach einem der vorhergehenden Ansprüche, wobei im Inneren der Kammer (3) Verbindungsstücke (33) vorhanden sind, die sich zwischen der vorderen Platte (4) und der hinteren Platte (5) erstrecken und einstückig mit jeweiligen Innenflächen (8, 11) der vorderen Platte (4) und der hinteren Platte (5) ausgebildet sind.

14. Modulares Heizsystem (40), das zwei oder mehr Module (41), die durch jeweilige Vorrichtungen (1) nach einem der vorhergehenden Ansprüche bestimmt sind, umfasst, die benachbart zueinander entlang einer, zwei oder drei Achsen, die orthogonal zueinander sind, positioniert sind, um, in Bezug auf die normale Gebrauchsposition des Systems (40), ein modulares System zu bilden, das sich in der Höhe, der Breite und/oder der Tiefe erstreckt.

15. System nach Anspruch 14, wobei die Module (41), in Bezug auf die normale Gebrauchsposition des Systems (40), hintereinander in der Richtung der Dicke des Systems (40) positioniert sind, sodass sie ein modulares System bestimmen, das sich in der Tiefe erstreckt; und/oder lateral und/oder vertikal nebeneinander positioniert sind, sodass sie ein modulares System bestimmen, das sich in der Breite und/oder der Höhe erstreckt.

16. System nach Anspruch 14 oder 15, wobei die Module (41) über Anschlussgruppen (51) angeschlossen sind, die Paare von Anschlüssen (16) jeweiliger Vorrichtungen (1), die einander zugewandt und aneinander ausgerichtet sind, miteinander verbinden; und/oder über Anschlussgruppen (51), die Paare von Anschlüssen (16) jeweiliger Vorrichtungen (1), die lateral oder vertikal nebeneinanderliegend angeordnet sind, miteinander verbinden.

17. System nach einem der Ansprüche 14 bis 16, das mindestens zwei Module (41) umfasst, die, in Bezug auf die normale Gebrauchsposition des Systems (40), hintereinander in der Richtung der Dicke des Systems (40) positioniert sind, sodass sie ein modulares System bestimmen, das sich in der Tiefe erstreckt; wobei jedes der Module (41) eine vordere Platte (4) ohne Austauschrippen und eine hintere Platte (5), die mit Wärmeaustauschrippen (17) versehen ist, aufweist oder eine vordere Platte (4) und eine hintere Platte (5), die mit jeweiligen Wärmeaustauschrippen (17) versehen sind, aufweist.

18. Verwendung einer Vorrichtung nach einem der Ansprüche 1 bis 13 zum Beheizen von Innenräumen/-umgebungen, wobei die Vorrichtung (1) über Befestigungsglieder an einer Stützwand (W) fixiert und so positioniert ist, dass die Außenfläche (9) der vorderen Platte (4) dem zu beheizenden Raum zugewandt ist und die Außenfläche (12) der hinteren Platte (5) der Stützwand (W) zugewandt ist.

19. Verwendung nach Anspruch 18, wobei die Vorrichtung (1) mittels Anschlussgruppen (51), die Paare von Anschlüssen (16) jeweiliger Vorrichtungen (1) miteinander verbinden, an anderen Vorrichtungen (1) angeschlossen ist, um ein modulares System (40) in modularer Form im Installationsschritt in dem zu beheizenden Raum / der zu beheizenden Umgebung zu montieren, und welches sich, in Bezug auf die normale Gebrauchsposition des Systems (40), in der Höhe, der Breite und/oder der Tiefe erstreckt.

## Revendications

1. Dispositif de chauffage à circulation de liquide (1) pour un assemblage modulaire dans l'étape d'installation, comprenant au moins un corps (2) pourvu d'une chambre intérieure (3), dans laquelle un liquide de chauffage peut circuler, et d'une plaque avant (4), ayant une face externe (9) en regard, en cours d'utilisation, de l'espace à chauffer et définissant une première surface d'échange thermique (10), et une plaque arrière (5), opposée à la plaque avant (4) et délimitant la chambre (3) à l'arrière ; et quatre raccordements (16) communiquant avec la chambre (3) et s'étendant depuis le corps (2) ; la plaque avant (4) délimitant la chambre (3) à l'avant et ayant une face interne (8), opposée à la face externe (9), et en regard de la chambre (3) et pouvant être mouillée par le liquide de chauffage ; et la plaque arrière (5) ayant une face interne (11), en regard de la chambre (3) et pouvant être mouillée par le liquide de chauffage, et une face externe (12), opposée à la face interne (11) et définissant une seconde surface d'échange thermique (13), apte à faire face, en cours d'utilisation, à une paroi support (W) à laquelle le dispositif (1) est apte à être fixé par des éléments de fixation ; la chambre (3) étant délimitée à l'avant par la face interne (8) de la plaque avant (4) et à l'arrière par la face interne (11) de la plaque arrière (5) ; la face interne (8) de la plaque avant (4) et la face interne (11) de la plaque arrière (5) étant en regard l'une de l'autre et étant espacées de sorte que la distance entre lesdites faces internes (8, 11) définit l'épaisseur de la chambre (3) ; et la plaque arrière (5) supporte une pluralité d'ailettes d'échange thermique (17) qui s'étendent à l'extérieur de la chambre (3) depuis ladite face externe (12) de la plaque arrière (5) et sont solidaires et forment une pièce monolithique avec la plaque arrière (5) ; et les quatre raccordements (16) font saillie à partir de la plaque arrière (5) ; la totalité des ailettes (17) s'étendant directement depuis la chambre (3) et étant jointes directement à une paroi humide (18) de la chambre (3) de sorte que la totalité des ailettes (17) sont des ailettes humides ayant un bord d'ancrage (19) joint à la paroi humide (18) de la chambre (3), qui est apte à venir directement en contact avec le liquide de chauffage ; et les raccordements (16) sont sensiblement perpendiculaires à ladite plaque arrière (5) de sorte que le dispositif (1) est configuré pour être apte à être raccordé à d'autres dispositifs (1), au moyen de groupes de raccordement (51) qui peuvent joindre des paires de raccordements (16) de dispositifs respectifs (1), et pour être apte à l'assemblage d'un système modulaire (40) qui peut être assemblé sous forme modulaire dans l'étape d'installation dans une pièce/environnement à chauffer et qui peut s'étendre, par rapport à la position normale d'utilisation du système (40), en hauteur, en largeur et/ou en profondeur.

2. Dispositif selon la revendication 1, les raccordements (16) étant positionnés sensiblement le long d'un bord périphérique (7) de la chambre (3).

3. Dispositif selon l'une des revendications précédentes, la chambre (3) s'étendant sur au moins 60 %, ou au moins 65 %, ou au moins 70 %, ou au moins 75 %, ou au moins 80 %, ou au moins 85 %, ou au moins 90 % de la surface de la face interne (8) de la plaque avant (4).

4. Dispositif selon l'une des revendications précédentes, la chambre (3) étant une chambre mince ayant une épaisseur, dans au moins une ou plusieurs parties de la chambre (3), qui est inférieure à au moins une de la hauteur et de la largeur.

5. Dispositif selon l'une des revendications précédentes, la chambre (3) ayant une forme sensiblement plate et s'étendant principalement le long d'un axe longitudinal (A), vertical en cours d'utilisation, et d'un axe transversal (B), horizontal en cours d'utilisation, définissant la hauteur et la largeur de la chambre (3), respectivement ; et la chambre (3) ayant une épaisseur, mesurée perpendiculairement audit axe longitudinal (A) et audit axe transversal (B), qui est inférieure à la hauteur et à la largeur.

6. Dispositif selon l'une des revendications précédentes, dans lequel, par rapport à la position normale d'utilisation du dispositif (1), dans laquelle la plaque avant (4) est sensiblement verticale et est en regard de l'espace à chauffer, la chambre (3) a une hauteur et une largeur chacune étant au moins 10 fois supérieure, de préférence au moins 20 fois supérieure ou au moins 30 fois supérieure à l'épaisseur de la chambre (3).

7. Dispositif selon l'une des revendications précédentes, la plaque avant (4) étant pourvue d'autres ailettes d'échange thermique (17), qui sont solidaires et forment une pièce monolithique avec la plaque avant (4) depuis laquelle elles font saillie.

8. Dispositif selon l'une des revendications précédentes, la plaque avant (4) étant sensiblement lisse et la plaque arrière (5) étant pourvue d'ailettes d'échange thermique (17), ou la plaque avant (4) et la plaque arrière (5) étant pourvues d'ailettes d'échange thermique respectives (17) ; et, dans le cas où la plaque avant (4) est pourvue d'ailettes d'échange thermique (17) et ainsi la première surface d'échange thermique (10), apte à faire face, en cours d'utilisation, à l'espace à chauffer, étant une surface à ailettes, un couvercle décoratif étant positionné devant lesdites ailettes d'échange thermique (17) pour recouvrir lesdites ailettes d'échange thermique (17).

9. Dispositif selon l'une des revendications précédentes, le corps (2) étant formé de deux pièces monolithiques jointes le long de bords périphériques respectifs (6).

10. Dispositif selon l'une des revendications précédentes, chacune des plaques (4, 5) étant sensiblement plate ou incurvée ou ondulée ; et/ou les plaques (4, 5) étant sensiblement parallèles ou inclinées les unes par rapport aux autres.

11. Dispositif selon l'une des revendications précédentes, la chambre (3) logeant entre les deux plaques (4, 5) des éléments internes (34), qui agissent sur l'écoulement du liquide chauffant circulant dans la chambre (3) et sont formés et/ou agencés de manière à favoriser une répartition homogène du liquide chauffant dans la chambre (3).

12. Dispositif selon la revendication 11, les éléments (34) comprenant un premier distributeur (35a), positionné à une extrémité supérieure (36a) de la chambre (3), et/ou un second distributeur (35b), positionné à une extrémité inférieure (36b) de la chambre (3).

13. Dispositif selon l'une des revendications précédentes, à l'intérieur de la chambre (3) se trouvant des traverses (33) qui s'étendent entre la plaque avant (4) et la plaque arrière (5) et sont solidaires des faces internes respectives (8, 11) de la plaque avant (4) et de la plaque arrière (5).

14. Système de chauffage modulaire (40), comprenant au moins deux modules (41) définis par des dispositifs respectifs (1) selon l'une des revendications précédentes, positionnés de manière adjacente les uns aux autres selon un, deux ou trois axes orthogonaux les uns par rapport aux autres pour former, par rapport à la position normale d'utilisation du système (40), un système modulaire s'étendant en hauteur, en largeur et/ou en profondeur.

15. Système selon la revendication 14, les modules (41) étant positionnés, par rapport à la position normale d'utilisation du système (40), l'un derrière l'autre dans la direction de l'épaisseur du système (40), définissant un système modulaire s'étendant en profondeur ; et/ou latéralement et/ou verticalement les uns à côté des autres, définissant un système modulaire s'étendant en largeur et/ou en hauteur.

16. Système selon la revendication 14 ou 15, les modules (41) étant raccordés par des groupes de raccordement (51) qui joignent des paires de raccordements (16) de dispositifs respectifs (1) se faisant face et alignés entre eux ; et/ou par des groupes de raccordement (51) qui joignent des paires de raccordements (16) de dispositifs respectifs (1) agencées latéralement ou verticalement côte à côte.

17. Système selon l'une des revendications 14 à 16, comprenant au moins deux modules (41) qui, par rapport à la position normale d'utilisation du système (40), sont positionnés l'un derrière l'autre dans la direction de l'épaisseur du système (40), définissant un système modulaire s'étendant en profondeur ; chacun desdits modules (41) ayant une plaque avant (4) sans ailette d'échange et une plaque arrière (5) pourvue d'ailettes d'échange thermique (17), ou ayant une plaque avant (4) et une plaque arrière (5) pourvues d'ailettes d'échange thermique respectives (17).

18. Utilisation d'un dispositif selon l'une des revendications 1 à 13 pour le chauffage de pièces/environnements intérieurs, le dispositif (1) étant fixé par des éléments de fixation à une paroi support (W) et positionné avec la face externe (9) de la plaque avant (4) en regard de l'espace à chauffer, et la face externe (12) de la plaque arrière (5) en regard de la paroi support (W).

19. Utilisation selon la revendication 18, le dispositif (1) étant raccordé à d'autres dispositifs (1), au moyen de groupes de raccordement (51) qui joignent des paires de raccordements (16) de dispositifs respectifs (1), de manière à assembler un système (40) sous forme modulaire lors de l'étape d'installation dans la pièce/environnement à chauffer et qui s'étend, par rapport à la position normale d'utilisation du système (40), en hauteur, en largeur et/ou en profondeur.
